# EUROPÄISCHE PATENTANMELDUNG

(11) **EP 2 881 691 A1**
(43) Veröffentlichungstag der Anmeldung: **10.06.2015**
(21) Anmeldenummer: 13005713.6
(22) Anmeldetag: 09.12.2013
(51) Int. Cl.: F28F 9/02, F28F 9/16, F28F 19/00

(54) **Wärmeüberträger mit Rohrscheibe und eingeschobener Hülse**

(71) Anmelder: Balcke-Dürr GmbH, 40882 Ratingen (DE)
(72) Erfinder: Telgen, Thomas, 40878 Ratingen (DE); Blossey, Jens, 45663 Recklinghausen (DE); Fiorenzano De Albuquerque, Ricardo, 40470 Düsseldorf (DE); Staggenborg, Tim, 40880 Ratingen (DE); Band, Dirk, 40545 Düsseldorf (DE); Ivanov, Igor, 45276 Essen (DE)
(74) Vertreter: Heidler, Philipp

(57) **Zusammenfassung**

Die Erfindung betrifft einen Wärmeübertrager, insbesondere Rohrbündelwärmeübertrager, mit einer, insbesondere im Wesentlichen hohlzylindrischen, Außenwand und einer Rohrscheibe, die zusammen einen Innenraum definieren, und mit einer Anzahl von Rohren, die durch die Rohrscheibe hindurch geführt angeordnet sind und in den Innenraum hineinragen. Die Erfindung schlägt die Integration einer Hülse in den Innneraum wenigstens eines Rohres auf Höhe der Rohrscheibe vor, um eine Wärmeübertragung aus dem Rohrinneren in Radialrichtung zur Rohrscheibe zu reduzieren.

## Beschreibung

Die Erfindung betrifft einen Wärmeübertrager, insbesondere einen Rohrbündelwärmeübertrager, gemäß dem Oberbegriff des Anspruchs 1 und eine Hülse für einen solchen Wärmeübertrager.

Rohrbündelwärmeübertrager sind aus dem Stand der Technik zur Wärmeübertragung von Fluiden in verschiedenen industriellen Prozessen bekannt. Beispielsweise werden sie in Kühlluftkühlern von Gasturbinen eingesetzt, um hier durch Kompression erwärmte Luft zu kühlen und somit die Kühlwirkung in der Gasturbine zu verbessern. Ein vom Grundaufbau her gattungsgemäßer Wärmeübertrager ist beispielsweise in der DE 28 26 707 A1 und der DE 10 2012 001 091 A1 der Anmelderin beschrieben. Auf diese Schriften wird in Bezug auf den Aufbau und die Funktionsweise solcher Wärmeübertrager Bezug genommen. Gattungsgemäße Wärmeübertrager der vorliegenden Art werden auch als Wärmetauscher, insbesondere Rohrbündelwärmetauscher, oder Wärmeüberträger bezeichnet.

Üblicherweise sind derartige aus dem Stand der Technik bekannte Rohrbündelwärmeübertrager aus einem Hohlraum mit einer Außenwand und einer Innenwand, beispielsweise in Form eines Hohlzylinders, beispielsweise aus Stahlblech, aufgebaut. In dessen Innenraum ist eine Vielzahl von Rohren angeordnet. Die Rohre sind mit ihren End- bzw. Anfangsabschnitten jeweils in Ausnehmungen einer Rohrscheibe aufgenommen. Je nach Ausbildung der Rohre kann es dazu vorgesehen sein, dass jeweils eine Rohrscheibe für den Fluideintrittsbereich in die Rohre und eine weitere Rohrscheibe für den Fluidaustrittsbereich der Rohre vorgesehen ist. Dies ist beispielsweise bei gerade Ausbildung der Rohre der Fall. Alternativ können die Rohre U-förmig gebogen sein und mit ihren Rohreintrittsbereichen und ihren Rohraustrittsbereichen in ein und derselben Rohrscheibe angeordnet sein. Im Betrieb des Wärmeübertragers strömt ein erstes Medium durch den Hohlzylinder an der Außenseite der Rohre entlang und ein zweites Medium strömt durch die Rohre. Dabei kühlt das wärmere der beiden Medien ab, während das kältere Medium durch den Wärmeaustausch aufgeheizt wird. Ein klassischer Anwendungsfall ist beispielsweise die Kühlung von Turbinendampf in Wärmekraftwerken. Dazu wird Dampf durch die Rohre geleitet und von einem Kühlmedium, beispielsweise Kühlluft, umströmt oder das Aufheizen von Turbinendampf in einem Zwischenerhitzer, wie in den vorstehenden Schriften beschrieben. Die Erfindung ist allerdings nicht auf diese Anwendungsbeispiele beschränkt, sondern kann grundsätzlich überall dort eingesetzt werden, wo ein Wärmeübertrager mit dem vorstehend beschriebenen Grundaufbau eingesetzt wird.

Problematisch bei den aus dem Stand der Technik bekannten Rohrbündelwärmeübertragern ist, dass an der Rohrscheibe, in welche die Rohre bzw. deren End- und Anfangsabschnitte üblicherweise fest gewalzt sind, hohe thermische Spannungen entstehen. Insbesondere aufgrund der Tatsache, dass die Rohrscheibe weiterhin üblicherweise an dem Mantel des Hohlzylinders befestigt ist und in vielen Anwendungen, z. B. in Boilern, bei Kraft-Wärme-Kopplung etc., ein hoher Temperaturgradient zwischen der Kaltseite und der Warmseite des Wärmeübertragers auftritt, wird die Rohrscheibe durch hohe thermische Spannungen stark beansprucht. Besonders problematisch ist dabei eine ungleichmäßige Wärmeverteilung in Radialrichtung der Rohrscheibe zwischen den Rohren und der Rohrscheibe. Infolgedessen kann das Material der Rohrscheibe beschädigt werden und der Wärmeübertrager verliert dann seine Funktionalität.

Daher ist es die Aufgabe der vorliegenden Erfindung, eine Möglichkeit für einen Wärmeübertrager bereitzustellen, mittels welcher hohe thermische Spannungen an der Rohrscheibe vermieden oder zumindest erheblich reduziert werden können. Diese Aufgabe wird durch einen Wärmeübertrager und eine Hülse gemäß den unabhängigen Ansprüchen gelöst. Vorteilhafte Ausführungsformen sind in den jeweiligen abhängigen Ansprüchen definiert.

Erfindungsgemäß bereitgestellt wird somit ein gattungsgemäßer Wärmeübertrager, insbesondere Rohrbündelwärmeübertrager, mit einer, insbesondere im Wesentlichen hohlzylindrischen, Außenwand und einer Rohrscheibe, die zusammen einen Innenraum definieren, und mit einer Anzahl von Rohren, die durch die Rohrscheibe hindurch geführt angeordnet sind und in den Innenraum hineinragen. Der wesentliche Grundgedanke der Erfindung liegt nun darin, dass in zumindest einem Rohr von der Anzahl von Rohren eine Hülse im Bereich der Rohrscheibe angeordnet ist. Die erfindungsgemäß in zumindest einem Rohr angeordnete Hülse stellt einen in Radialrichtung wirkenden thermischen Isolator oder einen Träger für einen Isolator in diesem Bereich dar, um so eine radiale Wärmeübertragung zwischen den Rohren und der Rohrscheibe zu vermeiden bzw. zumindest deutlich zu verringern. Hierdurch werden thermische Spannungen in der Rohrscheibe effektiv und auf einfache Weise vermieden oder zumindest deutlich verringert, so dass keine Beschädigungen an der Rohrscheibe auftreten und der Wärmeübertrager insbesondere auch dann seine volle Funktionalität beibehält, wenn der Temperaturunterschied zwischen dem ersten Medium und dem zweiten Medium, insbesondere im Eintrittsbereich der Rohrscheibe, verhältnismäßig drastisch ausfällt. Die Anordnung der Hülse erfolgt somit in der Weise, dass sie innerhalb des wenigstens einen Rohres wenigstens in demjenigen Abschnitt des Rohres steckt, der durch die Rohrscheibe verläuft, wobei die Hülse selbstverständlich in Richtung zu einer oder beiden Seiten der Rohrscheibe innerhalb des Rohres auch über den Bereich der Rohrscheibe in Längsrichtung des Rohres vorstehen kann. In diesem Bereich strömt das in den Rohren geführte Fluid somit nicht unmittelbar an der Rohrinnenwand entlang, sondern durch die im Inneren des Rohres angeordnete Hülse und/oder durch den durch die Hülse gehaltenen Isolator hindurch. Das Fluid wird in diesem Bereich somit zur Rohrinnenwand durch die Hülse und/oder durch den durch die Hülse gehaltenen Isolator in Radialrichtung beabstandet geführt, so dass eine Wärmeübertragung in Radialrichtung vom Inneren des Rohres zur Rohrscheibe vermindert oder sogar im Wesentlichen unterbunden ist. Dadurch wird die thermische Belastung der Rohrscheibe effizient und auf baulich vergleichsweise einfache Art und Weise vermindert. Darüber hinaus eignet sich die Erfindung hervorragend zur Nachrüstung bestehender Systeme, wobei die Hülsen dann entsprechend beschaffen sein müssen, dass sie vom jeweiligen Rohrende kommend bis auf die Höhe der Rohrscheibe in diese eingeschoben und anschließend fixiert werden können. Die Radialrichtung bezieht sich dabei auf die Richtung quer zur Längsmittelachse des jeweiligen Rohres.

Gemäß einer bevorzugten Ausführungsform ist die Hülse zu wenigstens einem Außenrand hin in Axialrichtung der Hülse abgeflacht ausgebildet und weist einen sicher vergrößernden Innendurchmesser auf. Die durch die im Rohr steckende Hülse vorliegenden Querschnittsveränderungen verlaufen dadurch gleichmäßig und rampenartig, so dass beispielsweise durch abrupte Querschnittsveränderungen auftretende Druckanstiege und -abfälle reduziert werden und eine harmonischeres Strömungsverhalten innerhalb der Rohres trotz eingeführter Hülse möglich ist. Die Größenveränderungen der Querschnittsveränderung der Innenwand der Hülse verläuft dabei idealerweise von einem kleineren Innendurchmesser, vorzugsweise mit gleichmäßiger Steigung, bis, soweit im Hinblick auf Bauteilstabilität möglich, nahezu zu einem mit dem Innendurchmesser der Innenwand identischen Innendurchmesser. Eine derartige sich zum Hülsenrand erstreckende Abflachung weist die Hülse besonders bevorzugt zu ihrem stromabwärts gelegenen Außenrand hin auf.

Gemäß einer weiteren bevorzugten Ausführungsform weist die Hülse zu wenigstens einem Außenrand hin einen in Radialrichtung vorstehenden Anschlagkragen auf, dessen Anschlagdurchmesser größer als der Innendurchmesser des zumindest einen Rohres ist. Durch diese Ausbildung passt die Hülse somit im Bereich ihres Anschlagkragens nicht in das Rohrinnere. Hierdurch können die Hülse und das Rohr gut relativ zueinander positioniert und fixiert werden und es kann durch bauliche Abstimmung der Länge der Hülse und der Größe des Anschlagkragens sichergestellt werden, dass die Hülse in ihrer Anschlagposition auch tatsächlich im Bereich der Rohrscheibe positioniert ist. Ferner stellt der über den Rohreintritt radial vorstehende Anschlagkragen einen guten Ansatzpunkt für weitergehende Befestigungsmaßnahmen, beispielsweise Verschweißungen etc., zur Verfügung, falls gewünscht und erforderlich.

Grundsätzlich ist möglich, die Hülse selbst bereits aus einem Material herzustellen, das schlechte Wärmeleitungseigenschaften aufweist. Eine schlechte Wärmeleitfähigkeit im Sinne der vorliegenden Erfindung liegt vorliegend allgemein insbesondere dann vor, wenn die Wärmeleitfähigkeit bei 600°C zwischen 0,05 bis 0,2 W/mK liegt, wobei diese Bereichsangabe insbesondere lediglich erläuternd und nicht beschränkend zu verstehen ist. Bei dieser Ausführungsform wirkt die Hülse somit bereits selbst als Wärmeisolator. Allerdings sind die dafür im praktischen Einsatz in Frage kommenden Materialien, wie beispielsweise geeignete Keramiken, sehr teuer und/oder in der praktischen Handhabung kompliziert. Vorzugsweise wird die Hülse daher mit einem zusätzlichen Isolationsmaterial kombiniert verwendet. Die Hülse dient dann primär als Befestigungsmittel des Isolationsmaterials im Rohrinneren. Dazu weist die Hülse beispielsweise im Bereich zwischen ihren Außenrändern in Längs- bzw. Axialrichtung eine in Axialrichtung verlaufende Ringaussparung im Außenmantel auf, über die zwischen der Außenmantelfläche der Hülse und der Innenwandung des zumindest einen Rohres ein Aufnahmehohlraum ausgebildet ist. Der Aufnahmehohlraum hat somit beispielsweise eine ringförmige Form und wird zwischen der Außenwand der Hülse und der Innenwand der Rohres gebildet und ist in Längsrichtung der Hülse durch entsprechende Randwände der Hülse begrenzt. Dieser mit Luft gefüllte Raum kann bereits für sich als thermischer Isolator wirken. Dieser Aufnahmehohlraum erstreckt sich in Axialrichtung vorzugsweise wenigstens über die vollständige Dicke der Rohrscheibe beziehungsweise mit anderen Worten über den gesamten Bereich zwischen der in Strömungsrichtung des Mediums im Rohr Vorderseite und der Rückseite der Rohrscheibe.

Die Isolationswirkung der Hülse wird dann sogar noch verstärkt, wenn die Hülse zwischen ihrer Außenmantelwand und der Innenwandung des zumindest einen Rohres zusätzlich einen Isolator, insbesondere im Bereich des Aufnahmehohlraums, aufweist. Bei dieser Ausführungsform ist somit ein zusätzliches Mittel vorgesehen, welches durch die Hülse selbst innerhalb des Rohres in Position auf Höhe der Ringscheibe gehalten wird. Dieses Mittel sollte vom Grundsatz her eine schlechte Wärmeleitfähigkeit aufweisen. Unter einem Isolator wird vorliegend somit eine Einrichtung verstanden, die gute wärmeisolierende Eigenschaften beziehungsweise eine schlechte Wärmeleitfähigkeit aufweist und somit eine Wärmeweiterleitung vom Rohrinneren zur Rohrscheibe hin in Radialrichtung verhindert oder zumindest wesentlich reduziert. Der Isolator kann dabei einstückig aber auch mehrteilig sein. Ferner kommen hier grundsätzlich neben materialeinheitlichen Isolatoren auch verschiedene Materialien umfassende Isolatoren in Betracht. Wesentlich ist die Eignung des Isolators, durch die Hülse im Bereich der Rohrscheibe gehalten werden zu können und dessen Eigenschaft, eine Wärmeweiterleitung zu vermindern oder sogar weitestgehend zu verhindern.

Der Isolator kann dabei insbesondere ein Isolationskörper sein, welcher in dem zumindest einen Rohr durch die Hülse formschlüssig und/oder kraftschlüssig fixiert ist. Die Hülse übernimmt dabei somit im Wesentlichen eine Positionierungsfunktion und gewährleistet, dass der Isolator im Betrieb an der vorgesehenen Stelle auf Höhe der Rohrscheibe im Inneren des Rohres gehalten wird. Dazu ist die Hülse beispielsweise in der Weise ausgebildet, dass sie via Reibschluss zur Innenwandung des Rohres in ihrer Position gehalten wird. Der Isolator kann ferner beispielsweise selbst als Hülse oder zumindest hülsenartige Gesamtheit ausgebildet sein, die insbesondere in dem vorstehend beschriebenen Aufnahmefreiraum, beispielsweise der Ringaussparung, zwischen der Hülsenaußenseite und der Rohrinnenwandung lokalisiert ist.

Der Isolationskörper besteht vorzugsweise aus einem Material mit geringer Wärmeleitfähigkeit. Hier hat sich im praktischen Einsatz insbesondere die Verwendung von ein- oder mehrlagigem Isolationspapier als besonders geeignet herausgestellt. Ein solches Isolationspapier ist einerseits flach und kann damit gut in den Bereich zwischen Hülse und Rohr eingebracht werden. Darüber hinaus weist es andererseits gute Wärmeisolationseigenschaften auf. Bei einem Isolationspapier handelt es sich insbesondere um eine Papier umfassend feuerfeste, keramische Fasern.

Vorzugsweise ist der Isolationskörper in seiner räumlichen Beschaffenheit auf die Hülse abgestimmt ausgebildet, beispielsweise in der Weise, dass er an der Innenwandung des zumindest einen Rohres und/oder an der Außenwandung der Hülse zumindest teilweise ebenfalls formschlüssig und/oder kraftschlüssig anliegt. Es ist bevorzugt, wenn der Isolationskörper insbesondere den Freiraum zwischen der Außenseite der Hülse und der Innenwandung des Rohres möglichst vollständig ausfüllt, um einen maximalen Isolationseffekt in Radialrichtung zur Rohrscheibe hin zu erzielen.

Vorteilhafterweise bedeckt der Isolationskörper die Innenwandung des zumindest einen Rohres wenigstens im Bereich des in der Rohrscheibe angeordneten Rohrbereiches, um gerade hier ein Auftreten thermischer Spannungen effektiv zu verhindern. Die Hülse und der Isolationskörper sind zueinander somit in der Weise ausgebildet, dass sich zumindest der Isolationskörper über die gesamte Dicke der Rohrscheibe in Längsrichtung des Rohres erstreckt. Dabei ist es auch möglich, dass der Isolationskörper und entsprechend auch die Hülse wesentlich länger ausgebildet sind als erforderlich ist, um sicherzustellen, dass der Bereich der Rohrscheibe auf jeden Fall im Inneren des jeweiligen Rohres Isolationskörper aufweist. Allerdings ist es gleichzeitig bevorzugt, die Größe und das Ausmaß der Gesamtheit aus Hülse und Isolationskörper so klein wie möglich zu gestalten, um den durch die Hülse hervorgerufenen Strömungswiderstand möglichst gering zu halten.

Gemäß einer weiteren bevorzugten Ausführungsform ist ein der Rohrscheibe vorgelagerter Hitzeschild vorhanden, um so auch die Stirnseite der Rohrscheibe vor hoher Temperatur bzw. einem hohen Temperaturgradienten durch direkte Anströmung des ersten Mediums zu schützen. Der Hitzeschild ist dabei stromaufwärts der Rohrscheibe vorgelagert, wobei die Rohrenden von der Rohrscheibe kommend bis zum Hitzeschild durch einen Abstandsraum hindurch verlängert ausgebildet sind, durch den Hitzschild hindurchgeführt sind und somit zur Anströmseite hin geöffnet im Hitzeschild angeordnet sind. Die Hülse kann dabei nun in der Weise ausgebildet sein, dass sie sich vom Eintrittsbereich des Hitzeschildes bis zum stromabwärts hinter der Rohrscheibe liegenden Bereich erstreckt.

Vorzugsweise ist der Wärmeübertrager gemäß den oben beschriebenen Ausführungsformen zur Kühlung von Kühllulft, insbesondere von Kühlluft von Gasturbinen, insbesondere von Gasturbinen in Gas- und Dampfkraftwerken verwendbar. Insbesondere bei diesen Anlagen sind die Rohrscheiben häufig extremen thermischen Belastungen ausgesetzt, so dass sich insbesondere dort die vorteilhaften Effekte besonders bemerkbar machen.

Ein weiterer Aspekt der Erfindung liegt somit auch in einem Kühlkreislauf einer Gasturbine sowie einem Gas- und Dampfkraftwerk mit einem erfindungsgemäßen Wärmeübertrager.

Erfindungsgemäß wird ferner eine Hülse für einen Wärmeüberträger gemäß den oben beschriebenen Ausführungsformen bereitgestellt, was die oben ausgeführten Vorteile mit sich bringt und insbesondere das Auftreten von thermischen Spannungen in dem Wärmeübertrager bzw. in der Rohrscheibe des Wärmeübertragers verhindert oder zumindest verringert. Die Hülse ist in ihrer Form dabei auf das jeweilige Rohr abgestimmt. Für den Fall, dass Rohre mit kreisförmigem Querschnitt verwendet werden, weist die Hülse somit vorzugsweise eine im Wesentlichen hohlzylindrische Form auf, wobei hier in Abhängigkeit der Rohrquerschnittsprofils auch Variationen möglich und von der Erfindung mit umfasst sind.

Nachstehend wird die Erfindung anhand eines in den Figuren dargestellten Ausführungsbeispiels näher erläutert. Es zeigen schematisch:
- Fig. 1: eine Schnittansicht durch einen Wärmeübertrager;
- Fig. 2: eine Draufsicht auf den Bereich B1 aus Fig. 1;
- Fig. 3: einen Längsschnitt durch den Bereich B1 aus Fig. 1;
- Fig. 4: eine Querschnittsansicht durch eine Rohrscheibe gemäß einer alternativen Ausführungsform mit Hülse und mit daran angeordnetem Isolator;
- Fig. 5: eine Draufsicht auf die Hülse aus Fig. 4;
- Fig. 6: eine Querschnittsansicht entlang der Linie A-A durch die in Fig. 5 dargestellte Hülse; und
- Fig. 7: ein in Form eine Hülse ausgebildeter Isolator aus einem Isolationspapier.

Gleiche und funktionsgleiche Bauteile sind in den Figuren auch bei verschiedenen Ausführungsformen mit gleichen Bezugszeichen angegeben.

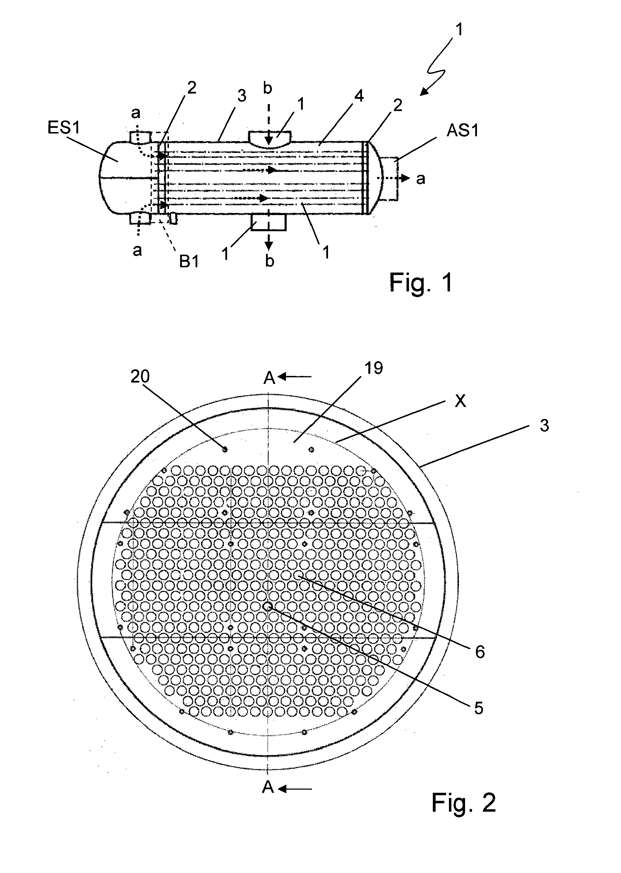

Fig. 1 zeigt eine Querschnittsansicht eines gattungsgemäßen Wärmeübertragers 1. Dessen wesentliche Elemente sind ein von einer Außenwand 3 umgebener Innenraum 4, von einer Eintrittsseite ES1 eines ersten Mediums zu einer Austrittsseite AS1 des ersten Mediums verlaufende Rohre 5, die im Anfangs- und Endbereich jeweils in einer Rohrscheibe 2 gelagert sind, sowie eine Eintrittsseite ES2 und eine Ausstrittsseite AS2 eines zweiten Mediums, dass an der Außenseite der Rohre 5 entlang strömt. Das erste Medium (nachstehend auch als Fluid bezeichnet) strömt in Pfeilrichtung a von der Eintrittsseite ES1 vor der Rohrscheibe 2 in die Rohre 5, wird innerhalb dieser Rohre 5 durch den Innenraum 4 geführt und tritt über die weitere, stromabwärts gelegene Rohrscheibe 2 in den Austrittsbereich AS1 aus. Das zweite Fluid strömt dagegen in Pfeilrichtung b durch den Wärmeübertrager 1 durch die zweite Eintrittsseite ES2 in den Innenraum 4, umströmt die Rohre 5 und verlässt den Innenraum 4 über die zweite Ausströmseite AS2. Im Innenraum 4 wird Wärme zwischen den beiden Fluiden übertragen.

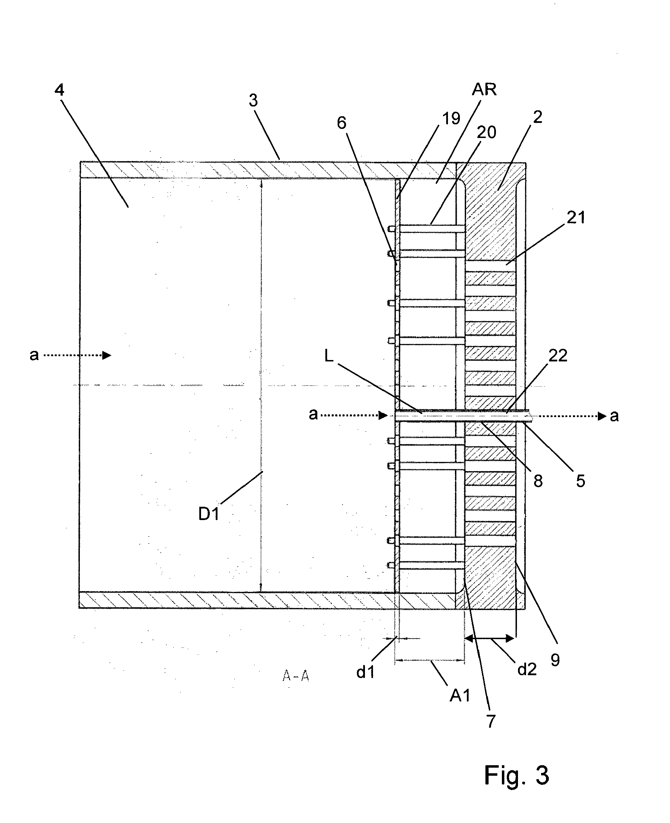

Fig. 2 ist eine Ansicht des gestrichelt umrahmten Bereichs B1 aus Fig. 1 in Strömungsrichtung gesehen. Fig. 3 ist eine Querschnittsansicht dieses Bereichs.

Eine Zusammenschau insbesondere der Figuren 2 und 3 v erdeutlicht den grundsätzlichen Aufbau des Bereiches B1 um die Rohrscheibe 2. In Strömungsrichtung a des ersten Fluids ist der Rohrscheibe zunächst ein Hitzeschild 19 vorgelagert. Dieses scheibenartig ausgebildete Element ist mit dem Abstand A1 über die Abstandhalter 20 in Strömungsrichtung von der Eintrittsoberfläche bzw. Vorderseite 7 der Rohrscheibe 2 beabstandet. Der Hitzeschild 19 stellt somit einen Anströmschutz gegenüber der Vorderseite 7 der Rohrscheibe 2 dar und das erste Fluid strömt vor dem Hitzeschild 19 in das Innere der in der Rohrscheibe 2 gelagerten Rohre 5. Der Hitzeschild 19 ist somit vollflächig über den gesamten Querschnitt des Innenraums 4 des Wärmeübertragers 1 ausgebildet und weist vorliegend einen Durchmesser D1 und in Strömungsrichtung eine Dicke d1 auf. Über die Fläche des Hitzeschildes 19 verteilt angeordnet sind Aufnahmeöffnungen 6 vorhanden, durch die hindurch die Rohre 5 von der Rohrscheibe 2 kommend ragen. Durch den Abstandsraum AR wird das erste Fluid somit durch die Rohre 5 geführt, so dass die Rohrscheibe 2 in der Fläche nicht direkt vom ersten Fluid angeströmt wird. Dadurch ist die Wärmeübertragung vom ersten Fluid durch auf die Vorderseite 7 der Rohrscheibe 2 strömendes erstes Fluid nahezu vollständig eliminiert.

In Strömungsrichtung des ersten Fluids ist stromabwärts zum Hitzeschild 19 die Rohrscheibe im Innenraum 4 des Wärmeübertragers 1 angeordnet. Auch die Rohrscheibe 2 erstreckt sich über den gesamten Innenraum 4 der Wärmeübertragers 1. Die Rohrscheibe 2 ist ein wesentliches Tragelement für die Vielzahl der Rohre 5 in deren Anfangs- oder Endbereich, wobei in den Figuren 2 und 3 lediglich ein Rohr 5 beispielhaft angegeben ist. In der Rohrscheibe sind der Anzahl der Rohre 5 entsprechend eine Vielzahl von Durchgangsbohrungen 21 vorhanden, die sich in Strömungsrichtung des ersten Fluid senkrecht zu den stirnseitigen Oberflächen der Rohrscheibe 2 entlang der Längsachse L von der Vorderseite 7 bis zur Rückseite 9 der Rohrscheibe 2 erstrecken. Im Betrieb ist in jeder der Durchgangsbohrungen 21 der in Fig. 2 ersichtlichen Verteilung entsprechend ein jeweils ein Rohr 5 angeordnet.

Der Wärmeübertrager 1 ist in seiner Gesamtheit somit als Rohrbündelwärmeübertrager zur Verwendung beispielsweise in Kühlluftkühlern von Gasturbinen ausgebildet. Die Rohrscheibe 2 und die Außenwand 3 definieren zusammen einen Innenraum 4, in welchen eine Vielzahl der dünnen Rohre 5, welche durch die Rohrscheibe 2 hindurch geführt sind, hineinragen. Die Rohre 5 sind im Arbeitsbetrieb von einem Fluid mit einer ersten Temperatur durchströmbar. Der von der hohlzylindrisch ausgebildeten Außenwand 3 umschlossene Innenraum 4 ist von dem zweiten Fluid durchströmbar, welches eine zweite Temperatur aufweist. Bei Durchströmen des Wärmeübertragers 1 durch die beiden Fluide unterschiedlicher Temperatur kühlt das heißere der beiden Fluide ab und das kältere der beiden Fluide wird erwärmt. Um dabei thermische Spannungen, welche im Bereich der Rohrscheibe 2 auftreten können, zu vermeiden, sind in den Rohren Hülsen angeordnet, welche näher in Zusammenhang mit Fig. 2 beschrieben werden.

Um die Temperaturübertragung innerhalb der Dicke d2 der Rohrscheibe 2 zu vermindern, d.h. eine Wärmeübertragung aus dem Rohrinneren 22 des Rohres 5 in Radialrichtung zur Längsachse L der Durchgangsbohrung 21, ist im Rohrinneren nun eine Hülse 8 angeordnet, die sich im Rohrinneren 22 in Strömungsrichtung über die Dicke d2 der Rohrscheibe 2 erstreckt.

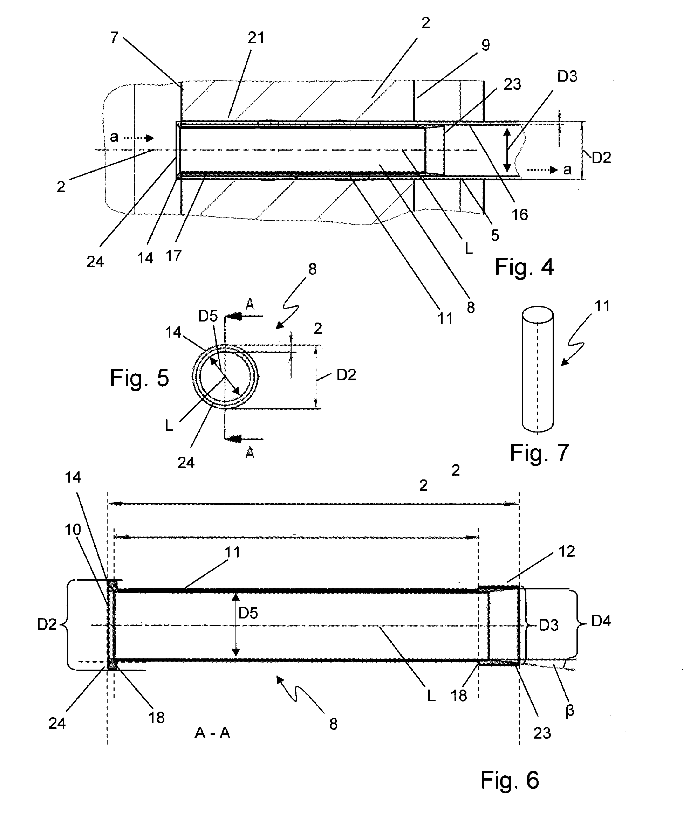

Der konkrete Aufbau der Hülse 8 an sich ergibt sich insbesondere aus den Figuren 5 und 6. In ihrer Gesamtform ist die Hülse 8 im Wesentlichen ebenfalls als ein hohlzylinderförmiger Körper aufgebaut. Dabei umfasst die Hülse 8 in Durchströmungsrichtung aufeinander folgend den Abstützbereich 10, den Isolationsbereich 11 und den Abstützbereich 12. Der Isolationsbereich ist zur Aufnahme eines Isolators 13 vorgesehen, bei dem es sich gemäß dem Ausführungsbeispiel in Fig. 7 um ein zur Hülse gerolltes Isolationspapier handelt. Der Isolator 13 wird durch die Hülse 8 im Rohr 5 in der nachstehend noch näher beschriebenen Weise eingeklemmt.

Im Abstützbereich 10 weist die Hülse 8 einen in Radialrichtung nach außen vorstehenden Abstützkragen 14 auf. In diesem Bereich hat die Hülse 8 einen Durchmesser D2, der größer als der Innendurchmesser D3 der Rohre 5 ist. Im vorliegenden Ausführungsbeispiel entspricht der Durchmesser D2 dem Außendurchmesser der Rohre 5. Wenn die Hülse 8 somit stirnseitig in das Rohr 5 eingeschoben wird, schlägt sie in Einschubrichtung mit dem Abstützkragen 14 gegen die Rohrstirnseite an und wird dadurch an einem weiteren Hineinschieben in das Rohr 5 formschlüssig gehindert. Auf diese Weise kann die Hülse nicht über ihren Außenrand 24 hinaus in das Rohr 5 eingeschoben werden und eine exakte Positionierung der Hülse im Rohr 5 ist sichergestellt.

Der Isolationsbereich 11 zeichnet sich beim vorliegenden Ausführungsbeispiel der Hülse 8 im Wesentlichen durch eine Rindaussparung 15 aus. Die Aussparung umläuft die Hülse 8 dabei zwischen der Abstützbereichen 10 und 12. Die Hülse ist mit anderen Worten bezüglich ihres Außenmantels mit einem kleineren Außendurchmesser D4 als der Innendurchmesser D3 des Rohres 5 ausgebildet. Dadurch wird ein definierter Hohlraum 17 zwischen der Außenseite der Hülse 8 und der Innenwandung 16 des Rohres 5 erhalten, der die Form eines Hohlzylinders aufweist. Von diesem Raum wird der Isolator 13 aufgenommen, so dass im Bereich der Rohrscheibe 2 von der Längsachse des Rohres 5 aus in Radialrichtung nach außen der folgende Aufbau erhalten wird: erstes Fluid - Hülse 8 - Isolator 13 - Rohr 5 - Rohrscheibe 2. Dies verdeutlicht, dass die Wärmeübertragung vom ersten Fluid in Richtung der Rohrscheibe 2 durch den Isolator 13 gemindert wird, so dass die thermische Belastung der Rohrscheibe 2 an dieser Stelle erheblich geringer ausfällt, als bei bisher im Stand der Technik vorhandenen Anordnungen.

Zum Rohrinneren hin schließt sich an den Isolationsbereich 11 schließlich der weitere Abstützbereich 12 an. In diesem Bereich weist die Hülse einen Durchmesser D3 entsprechend dem Rohrinnendurchmesser des Rohres 5 auf, so dass sich die Hülse an dieser Stelle an der Rohrinnenwand des Rohres 5 formschlüssig und, je nach Ausführungsform, kraftschlüssig abstützt. Der Hohlraum 17 wird somit stromaufwärts und stromabwärts durch diese Abstützbereiche 10 und 12 begrenzt, wobei hier jeweils entsprechende Randwände 18 vorhanden sind.

In Ihrer Gesamtheit ist die Hülse 8 somit einerseits in das Innere des Rohrs 5 von der Öffnungsseite kommend einschiebbar ausgebildet. Die Hülse 8 kann somit in das Rohr hineingeschoben werden. Andererseits ist gleichzeitig durch den Abstützkragen 14 gewährleistet, dass die Hülse 8 nur bis zu einem bestimmten Ausmaß in das Rohr 5 eingeschoben werden kann. Ein wesentlicher Aspekt der Erfindung liegt somit insbesondere auch in der Abstimmung der beiden Abstützbereiche 10 und 12 in der vorstehend beschriebenen und in den Figuren näher veranschaulichten Weise.

Wesentlich an der Ausbildung der Hülse im Bereich 12 ist ferner, dass sie stromabwärts mit ihrer Innenmantelfläche in Richtung der Außenmantelfläche zum Außenrand 23 hin abgeflacht beziehungsweise zur Außenmantelfläche hin spitz zulaufend ausgebildet ist. Im Querschnitt verläuft die Innenmantelfläche der Hülse somit in einem spitzen Winkel β zur Außenmantelfläche der Hülse 8. Dadurch erfolgt der Übergang vom Innendurchmesser D5 der Hülse zum Innendurchmesser D3 der Rohres 5 in Strömungsrichtung nicht sprunghaft sondern gleichmäßig über den Bereich der Abflachung.

Die Schnittansicht in Fig. 4 betrifft dabei die in das Rohr eingesetzte Hülse 8 mit Isolator 11 bei einer Ausführungsform ohne Hitzeschild 19. Für die in Fig. 3 angegebene Ausführungsform der Anordnung der Rohrscheibe 2 mit vorgelagertem Hitzeschild 19 ist es vorgesehen, die Hülse 8 in der Weise axial verlängert auszubilden, dass sie sich im in das Rohr 5 eingeschobenen Zustand von der stromaufwärts liegenden Stirnseite des Hitzeschildes 19 bis zur Rückseite 9 der Rohrscheibe 2 erstreckt.

## Patentansprüche

1. Wärmeübertrager (1), insbesondere Rohrbündelwärmeübertrager, mit einer, insbesondere im Wesentlichen hohlzylindrischen, Außenwand (3) und einer Rohrscheibe (2), die zusammen einen Innenraum (4) definieren, und mit einer Anzahl von Rohren (5), die durch die Rohrscheibe (2) hindurch geführt angeordnet sind und in den Innenraum (4) hineinragen,
**dadurch gekennzeichnet,**
**dass** in zumindest einem Rohr (5) von der Anzahl von Rohren (5) eine Hülse (8) im Bereich der Rohrscheibe (2) angeordnet ist.

2. Wärmeübertrager (1) gemäß Anspruch 1,
**dadurch gekennzeichnet,**
**dass** die Hülse (8) zu wenigstens einem Außenrand (23) hin in Axialrichtung der Hülse (8) abgeflacht ausgebildet ist und einen sicher vergrößernden Innendurchmesser aufweist.

3. Wärmeübertrager (1) gemäß einem der vorhergehenden Ansprüche,
**dadurch gekennzeichnet,**
**dass** die Hülse (8) zu wenigstens einem Außenrand (24) hin einen in Radialrichtung vorstehenden Anschlagkragen (17) aufweist, dessen Anschlagdurchmesser größer als der Innendurchmesser des zumindest einen Rohres (5) ist.

4. Wärmeübertrager (1) gemäß Anspruch 2 oder 3,
**dadurch gekennzeichnet,**
**dass** die Hülse (8) im Bereich zwischen ihren Außenrändern (23, 24) eine in Axialrichtung verlaufende Ringaussparung aufweist, über die zwischen einer Außenmantelfläche der Hülse (8) und der Innenwandung des zumindest einen Rohres (5) ein Aufnahmehohlraum (17) ausgebildet ist.

5. Wärmeübertrager (1) gemäß Anspruch 4,
**dadurch gekennzeichnet,**
**dass** zwischen der Hülse (8) und einer Innenwandung des zumindest einen Rohres (5) ein Isolator (13), insbesondere im Bereich des Aufnahmehohlraums (17), angeordnet ist.

6. Wärmeübertrager (1) gemäß Anspruch 5,
**dadurch gekennzeichnet,**
**dass** der Isolator (13) ein Isolationskörper ist, welcher in dem zumindest einen Rohr (5) durch die Hülse (8) formschlüssig und/oder kraftschlüssig fixiert ist.

7. Wärmeübertrager (1) gemäß Anspruch 6,
**dadurch gekennzeichnet,**
**dass** der Isolationskörper aus einem Material mit geringer Wärmeleitfähigkeit, insbesondere aus einem Isolationspapier, besteht.

8. Wärmeübertrager (1) gemäß einem der Ansprüche 5 bis 7,
**dadurch gekennzeichnet,**
**dass** der Isolator (13) Luft ist.

9. Wärmeübertrager (1) gemäß einem der Ansprüche 6 bis 8,
**dadurch gekennzeichnet,**
**dass** der Isolationskörper die Innenwandung des zumindest einen Rohres (5) zumindest teilweise bedeckt.

10. Wärmeübertrager (1) gemäß Anspruch 6 bis 9,
**dadurch gekennzeichnet,**
**dass** der Isolationskörper die Innenwandung des zumindest einen Rohres (5) wenigstens im Bereich des in der Rohrscheibe (2) angeordneten Rohrbereiches bedeckt.

11. Wärmeübertrager (1) gemäß einem der Ansprüche 1 bis 10,
**dadurch gekennzeichnet,**
**dass** ein der Rohrscheibe (2) vorgelagerter Hitzeschild (19) vorhanden ist.

12. Wärmeübertrager (1) gemäß einem der vorhergehenden Ansprüche,
**dadurch gekennzeichnet,**
**dass** er zur Kühlung von Kühlluft, insbesondere von Kühlluft von Gasturbinen, ausgelegt ist.

13. Wärmeübertrager (1) gemäß Anspruch 12,
**dadurch gekennzeichnet,**
**dass** er zur Kühlung von Kühlluft von Gasturbinen in Gas- und Dampfkraftwerken ausgelegt ist.

14. Hülse (8) für einen Wärmeübertrager (1) gemäß einem der Ansprüche 1 bis 14.
